# EUROPÄISCHE PATENTSCHRIFT

(11) **EP 1 843 131 B1**
(45) Veröffentlichungstag und Bekanntmachung des Hinweises auf die Patenterteilung: **15.04.2009**
(21) Anmeldenummer: 07003029.1
(22) Anmeldetag: 13.02.2007
(51) Int. Cl.: G01D 7/00, G01D 9/02

(54) **Verfahren und Vorrichtung zur graphischen Darstellung dynamischer Vorgänge**
Method and device for graphic representation of dynamic processes
Procédé et dispositif destinés à la représentation graphique de processus dynamiques

(30) Priorität: 03.04.2006 DE 102006015347
(43) Veröffentlichungstag der Anmeldung: 10.10.2007
(73) Patentinhaber: Funke-Dr. N. Gerber Labortechnik GmbH, 12105 Berlin (DE)
(72) Erfinder: Spindler, Wolfgang, 14532 Stahnsdorf (DE)
(74) Vertreter: Manitz, Finsterwald & Partner GbR

(56) Entgegenhaltungen:
- DE-A1- 19 940 434
- US-A- 5 801 968

## Beschreibung

Die Erfindung betrifft ein Verfahren sowie eine Vorrichtung zur graphischen Darstellung dynamischer Vorgänge.

Insbesondere in der Mess- und/oder Regeltechnik erfolgt ständig eine Überwachung von Grenzwerten. Dynamische Vorgänge, bei denen ein betreffender Messwert beispielsweise steil ansteigt oder abfällt, werden dagegen seltener als Kriterium für die Steuerung und/oder Regelung technischer Maschinen und Anlagen herangezogen. Für den Fall, dass dennoch dynamische Kriterien als Basis für die Steuerung bzw. Regelung verwendet werden, besteht ein Bedarf nach einer möglichst anschaulichen und verständlichen Darstellung für das betreffende Personal.

In der DE 199 40 434 A1 sind ein Verfahren sowie eine Vorrichtung zur Anzeige von Signalwerten beschrieben, bei denen ein jeweiliger zeitlicher Ausschnitt des Signals zusammen mit einem vorgegebenen zulässigen Maximalwert und einem vorgegebenen zulässigen unteren Grenzwert für das Signal graphisch in einem Anzeigefeld dargestellt werden. Dabei wird das Anzeigefeld während der Messung mit dem jeweiligen aktuellen Zeitpunkt der Messung, das heißt in Richtung der Zeitachse mitgezogen. Der vorgegebene zulässige Maximalwert und der vorgegebene zulässige untere Grenzwert für das Signal sind in dem Anzeigefeld in Form von zur Zeitachse parallelen horizontalen Linien wiedergegeben, deren vertikaler Abstand zur Zeitachse sich während der Messung nicht ändert. Dabei dienen diese einen vorgegebenen Abstand zur Zeitachse aufweisenden horizontalen Linien dazu, während der Messung auftretende Überschreitungen des Maximalwertes bzw. Unterschreitungen des Minimalwertes in dem Anzeigefeld kenntlich zu machen, wobei das Überschreiten bzw. Unterschreiten der genannten Werte kontinuierlich überwacht wird.

Bei einer aus der US-A-5 801 968 bekannten Messvorrichtung, bei der es sich beispielsweise um ein Thermometer handeln kann, wird die in einem jeweiligen aktuellen Zeitabschnitt gemessene Steigung der Messgröße jeweils mit einem im Voraus bestimmten minimalen Steigungswert verglichen, der der Differenz zwischen einem anfänglichen Wert der Messgröße und einem bestimmten darauffolgenden Messwert entspricht. Ist die aktuelle Steigung geringer als die im Voraus bestimmte Steigung, so wird der betreffende Wert als Endwert angenommen und mittels eines Displays angezeigt. Dabei wird das Display erst dann entsprechend angesteuert, wenn der betreffende Endwert erreicht ist, wobei dann auch nur dieser Endwert angezeigt wird.

Der Erfindung liegt die Aufgabe zugrunde, ein verbessertes Verfahren sowie eine verbesserte Vorrichtung der eingangs genannten Art zu schaffen, mit denen eine solche möglichst anschauliche und verständliche Darstellung dynamischer Vorgänge möglich ist.

Erfindungsgemäß wird diese Aufgabe gelöst durch ein Verfahren zur graphischen Darstellung dynamischer Vorgänge, bei dem wenigstens eine Messgröße während der Messung mittels einer elektronischen Mess- und/oder Steuereinrichtung und eines über diese entsprechend angesteuerten Displays daraufhin überwacht wird, ob deren Änderungen während einer bis zum jeweiligen aktuellen Messzeitpunkt reichenden vorgebbaren Zeitspanne innerhalb vorgebbarer Grenzen liegen, wobei auf dem Display ein Fenster dargestellt wird, dessen Abmessungen der vorgebbaren Zeitspanne und den vorgebbaren Grenzen entsprechen, und dieses auf dem Display dargestellte Fenster während der Messung mit dem jeweiligen aktuellen Messpunkt mitgezogen wird, wobei mittels der elektronischen Mess- und/oder Steuereinrichtung dann, wenn der zuletzt gemessene, sich über die vorgebbare Zeitspanne erstrecke Abschnitt der Messkurve vollständig innerhalb des Fensters liegt, das Kriterium, wonach die Änderungen der Messgröße während der vorgebbaren Zeitspanne innerhalb der vorgebbaren Grenzen liegen sollen, als erfüllt angesehen und die Messung beendet wird.

Damit kann man mit einem Blick erkennen, ob der zeitliche Messwertverlauf dem durch die vorgebbare Zeitspanne und die vorgebbaren Grenzen definierten Kriterium entspricht oder nicht.

Das Display wird über eine elektronische Mess- und/oder Steuereinrichtung entsprechend angesteuert. Bei dem Display kann es sich also insbesondere um ein elektronisches Display handeln.

Bevorzugt wird das Erfüllen des Kriteriums signalisiert.

Bei Erfüllung des Kriteriums kann zweckmäßigerweise ein Mittelwert für den innerhalb des Fensters liegenden Abschnitt der Messkurve gebildet werden.

Bevorzugt wird auch der betreffende Mittelwert auf dem Display angezeigt.

Bevorzugt wird die Messgröße auf dem Display online dargestellt.

Zudem wird die weiter oben angegebene Aufgabe erfindungsgemäß gelöst durch eine Vorrichtung zur graphischen Darstellung dynamischer Vorgänge, die ein über eine Mess- und/oder Steuereinrichtung ansteuerbares Display umfasst und sich dadurch auszeichnet, dass die Mess- und/oder Steuereinrichtung so ausgeführt und das Display über diese Mess- und/oder Steuereinrichtung so ansteuerbar ist, dass die Einhaltung vorgebbarer Grenzen für die Messwertänderungen während einer bis zum jeweiligen aktuellen Messzeitpunkt reichenden vorgebbaren Zeitspanne überwacht wird und dabei auf dem Display ein Fenster darstellbar ist, dessen Abmessungen der vorgebbaren Zeitspanne und den vorgebbaren Grenzen entsprechen und das während der Messung mit dem jeweiligen aktuellen Messpunkt mitgezogen wird, wobei die Mess- und/oder Steuerelektronik dann, wenn der zuletzt gemessene, sich über die vorgebbare Zeitspanne erstrecke Abschnitt der Messkurve vollständig innerhalb des Fensters liegt, das Kriterium, wonach die Änderungen der Messgröße während der vorgebbaren Zeitspanne innerhalb der vorgebbaren Grenzen liegen sollen, als erfüllt erkennt und die Messund/oder Steuerelektronik so ausgeführt ist, dass die Messung beendet wird, sobald das Kriterium erfüllt ist.

Vorteilhafterweise ist das Erfüllen des Kriteriums über die das Display ansteuernde Mess- und/ oder Steuerelektronik signalisierbar.

Bei einer bevorzugten praktischen Ausführungsform der erfindungsgemäßen Vorrichtung wird mittels der Mess- und/oder Steuerelektronik bei Erfüllung des Kriteriums ein Mittelwert für den innerhalb des Fensters liegenden Abschnitt der Messkurve gebildet. Dabei ist das Display über die Mess- und/oder Steuerelektronik vorteilhafterweise so ansteuerbar, dass auch der betreffende Mittelwert auf dem Display angezeigt wird.

Bevorzugt ist die Messgröße auf dem Display online darstellbar.

Das erfindungsgemäße Verfahren und die erfindungsgemäße Vorrichtung sind mit besonderem Vorteil insbesondere zur Bestimmung des Gefrierpunktes von Flüssigkeiten verwendbar. Dazu wird beispielsweise eine Probenflüssigkeit in ein Probengefäß eingebracht und die Probenflüssigkeit bei in einen Kühlblock oder dergleichen eingetauchtem Probengefäß leicht umgerührt, bis eine Temperatur von etwa -2°C bis -3°C erreicht ist. Durch anschließendes kräftiges Schlagen des Rührstabs an die Probengefäßwand wird die Kristallisation ausgelöst. Dies bewirkt ein Freiwerden von Schmelzwärme, was wieder einen Temperaturanstieg zur Folge hat. Die Temperatur stabilisiert sich dann auf einem dem Gefrierpunkt entsprechenden Niveau. Diese stabile Phase hält an, bis die Schmelzwärme auf gebraucht ist. Mittels des erfindungsgemäßen Verfahrens und der erfindungsgemäßen Vorrichtung kann also auf einfache und zuverlässige Weise das dem Gefrierpunkt entsprechende Niveau ermittelt werden.

Die Erfindung wird im Folgenden anhand von Ausführungsbeispielen unter Bezugnahme auf die Zeichnung näher erläutert; in dieser zeigen:
- Figur 1: eine vereinfachte schematische Darstellung einer beispielhaften Ausführungsform einer eine Mess- und/oder Steuereinrichtung sowie ein Display umfassenden Vorrichtung zur graphischen Darstellung dynamischer Vorgänge,
- Figur 2: eine schematische Darstellung eines auf dem Display darstellbaren Fensters mit einer Messkurve, die sich außerhalb des definierten Bereichs befindet, und
- Figur 3: eine mit der Figur 2 vergleichbare Darstellung, wobei sich die Messkurve im vorliegenden Fall jedoch innerhalb des Fensters befindet.

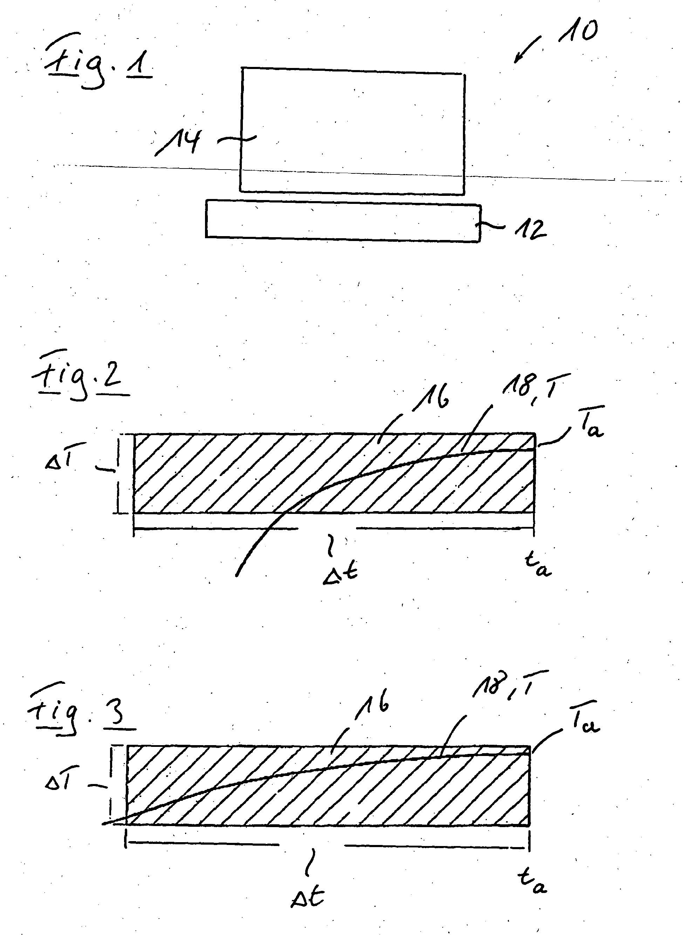

Figur 1 zeigt in einer vereinfachten schematischen Darstellung eine beispielhafte Ausführungsform einer Vorrichtung 10 zur graphischen Darstellung dynamischer Vorgänge. Die Vorrichtung 10 umfasst eine elektronische Mess- und/oder Steuereinrichtung 12 sowie ein über diese ansteuerbares Display 14.

Dabei ist die Mess- und/oder Steuereinrichtung 12 so ausgeführt und das Display 14 über diese Mess- und/oder Steuereinrichtung 12 so ansteuerbar, dass zur Überwachung der Einhaltung vorgebbarer Grenzen für die Messwertänderungen während einer bis zum jeweiligen aktuellen Messzeitpunkt tₐ (vgl. auch die Figuren 2 und 3) reichenden vorgebbaren Zeitspanne Δt auf dem Display 14 ein Fenster 16 darstellbar ist, dessen Abmessungen der vorgebbaren Zeitspanne Δt und den vorgebbaren Grenzen ΔT entsprechen und das während der Messung mit dem jeweiligen aktuellen Messpunkt Tₐ mitgezogen wird.

Die Länge des Fensters 16 entspricht im vorliegenden Fall also beispielsweise der Zeitspanne Δt, während die Höhe des Fensters beispielsweise einer maximal zulässigen Änderung ΔT der betreffenden Messgröße T entspricht, bei der es sich im vorliegenden Fall, wie weiter unten noch näher wird, beispielsweise um die Temperatur einer Messprobe handeln kann.

Die Mess- und/oder Steuerelektronik 12 erkennt dann, wenn der zuletzt gemessene, sich über die vorgebbare Zeitspanne Δt erstreckende Abschnitt der Messkurve 18 vollständig innerhalb des Fensters 16 liegt, das Kriterium, wonach die Änderungen ΔT der Messgröße T während der vorgebbarem Zeitspanne Δt innerhalb der vorgebbaren Grenzen liegen sollen, als erfüllt. Die betreffenden Grenzen, durch die die Höhe des Fensters 16 definiert ist, sind im vorliegenden Fall also durch die maximal zulässigen Änderungen ΔT bestimmt.

Das Erfüllen des Kriteriums kann vorteilhafterweise über die das Display 14 ansteuernde Mess- und/oder Steuerelektronik 12 signalisiert werden.

Bevorzugt ist die Mess- und/oder Steuerelektronik 12 so ausgeführt, dass die Messung beendet wird, sobald das Kriterium erfüllt ist.

Bei Erfüllung des Kriteriums kann mittels der Mess- und/oder Steuerelektronik 12 ein Mittelwert für den innerhalb des Fensters 16 liegenden Abschnitt der Messkurve 18 gebildet werden. Zweckmäßigerweise ist das Display 14 über die Mess- und/oder Steuerelektronik 12 so ansteuerbar, dass auch der betreffende Mittelwert auf dem Display 14 angezeigt werden kann.

Die Messgröße T ist auf dem Display 14 also online darstellbar.

Bei der Darstellung gemäß Figur 2 befindet sich die Messkurve 18 außerhalb des durch die Abmessungen Δt, ΔT des Fensters 16 definierten Bereichs. Das betreffende Kriterium ist hier also nicht erfüllt.

Dagegen liegt bei der Darstellung gemäß Figur 3 die Messkurve 18 innerhalb des Fensters 16, so dass das betreffende Kriterium, wonach die Änderungen ΔT der Messgröße T während der vorgebbaren Zeitspanne Δt innerhalb der vorgebbaren Grenzen liegen sollen, erfüllt ist.

Die Vorrichtung 10 ist mit besonderem Vorteil zur Bestimmung des Gefrierpunktes von Flüssigkeiten verwendbar. Dabei wird beispielsweise eine Probenflüssigkeit in ein Probengefäß gegeben und die Probenflüssigkeit bei in einen Kühlblock oder dergleichen eingetauchtem Probengefäß leicht umgerührt, bis eine Temperatur T von etwa -2°C bis -3°C erreicht ist. Durch anschließendes kräftiges Schlagen des Rührstabs an die Probengefäßwand wird die Kristallisation ausgelöst. Dies bewirkt ein Freiwerden von Schmelzwärme, was wieder einen Temperaturanstieg zur Folge hat. Die Temperatur T stabilisiert sich dann auf einem dem Gefrierpunkt entsprechenden Niveau. Diese stabile Phase hält an, bis die Schmelzwärme aufgebraucht ist.

Bei der Messkurve 18 handelt es sich im vorliegenden Fall also beispielsweise um die Gefrierpunktskurve, die den Verlauf der Temperatur T der Probenflüssigkeit über der Zeit t wiedergibt. Bei der Darstellung gemäß Figur 2 ist das dem Gefrierpunkt entsprechende Niveau noch nicht erreicht, da die durch die Gefrierpunktskurve gebildete Messkurve 18 sich außerhalb des durch das Fenster 16 definierten Bereichs befindet. Dagegen ist bei der Darstellung gemäß der Figur 3 dieses Niveau erreicht, so dass nunmehr der Gefrierpunkt bestimmt werden kann.

Im vorliegenden Fall betragen die Zeitspanne Δt beispielsweise 20 sec und die maximal zulässigen Änderungen ΔT der Messgröße T, z.B. 0,5 m°C. Grundsätzlich sind jedoch auch beliebige andere Werte denkbar.

### Bezugszeichenliste

- 10: Vorrichtung
- 12: Mess- und/oder Steuereinrichtung
- 14: Display
- 16: Fenster
- 18: Messkurve

- tₐ: aktueller Messzeitpunkt
- Δt: Zeitspanne
- Tₐ: aktueller Messpunkt
- ΔT: maximal zulässige Änderungen der Messgröße

## Patentansprüche

1. Verfahren zur graphischen Darstellung dynamischer Vorgänge, bei dem wenigstens eine Messgröße (T) während der Messung mittels einer elektronischen Mess- und/oder Steuereinrichtung (12) und eines über diese entsprechend angesteuerten Displays (14) daraufhin überwacht wird, ob deren Änderungen (ΔT) während einer bis zum jeweiligen aktuellen Messzeitpunkt (tₐ) reichenden vorgebbaren Zeitspanne (Δt) innerhalb vorgebbarer Grenzen liegen, wobei auf dem Display (14) ein Fenster (16) dargestellt wird, dessen Abmessungen der vorgebbaren Zeitspanne (Δt) und den vorgebbaren Grenzen (ΔT) entsprechen, und dieses auf dem Display (14) dargestellte Fenster (16) während der Messung mit dem jeweiligen aktuellen Messpunkt (Tₐ) mitgezogen wird, wobei mittels der elektronischen Messund/oder Steuereinrichtung (12) dann, wenn der zuletzt gemessene, sich über die vorgebbare Zeitspanne (Δt) erstrecke Abschnitt der Messkurve (18) vollständig innerhalb des Fensters (16) liegt, das Kriterium, wonach die Änderungen der Messgröße (T) während der vorgebbaren Zeitspanne (Δt) innerhalb der vorgebbaren Grenzen (ΔT) liegen sollen, als erfüllt angesehen und die Messung beendet wird.

2. Verfahren nach Anspruch 1,
**dadurch gekennzeichnet,**
**dass** das Erfüllen des Kriteriums signalisiert wird.

3. Verfahren nach Anspruch 1 oder 2,
**dadurch gekennzeichnet,**
**dass** bei Erfüllung des Kriteriums ein Mittelwert für den innerhalb des Fensters (16) liegenden Abschnitts der Messkurve (18) gebildet wird.

4. Verfahren nach Anspruch 3,
**dadurch gekennzeichnet,**
**dass** auch der betreffende Mittelwert auf dem Display (14) angezeigt wird.

5. Verfahren nach einem der vorhergehenden Ansprüche,
**dadurch gekennzeichnet,**
**dass** die Messgröße (T) auf dem Display (14) online dargestellt wird.

6. Vorrichtung (10) zur graphischen Darstellung dynamischer Vorgänge, mit einem über eine Mess- und/oder Steuereinrichtung (12) ansteuerbaren Display (14), insbesondere zur Durchführung des Verfahrens nach einem der vorhergehenden Ansprüche,
**dadurch gekennzeichnet,**
**dass** die Mess- und/oder Steuereinrichtung (12) so ausgeführt und das Display (14) über diese Mess- und/oder Steuereinrichtung (12) so ansteuerbar ist, dass die Einhaltung vorgebbarer Grenzen (ΔT) für die Messwertänderungen während einer bis zum jeweiligen aktuellen Messzeitpunkt (tₐ) reichenden vorgebbaren Zeitspanne (Δt) überwacht wird und dabei auf dem Display (14) ein Fenster (16) darstellbar ist, dessen Abmessungen der vorgebbaren Zeitspanne (Δt) und den vorgebbaren Grenzen (ΔT) entsprechen und das während der Messung mit dem jeweiligen aktuellen Messpunkt (Tₐ) mitgezogen wird, wobei die Mess- und/oder Steuerelektronik (12) dann, wenn der zuletzt gemessene, sich über die vorgebbare Zeitspanne (Δt) erstrecke Abschnitt der Messkurve (18) vollständig innerhalb des Fensters (16) liegt, das Kriterium, wonach die Änderungen (ΔT) der Messgröße (T) während der vorgebbaren Zeitspanne (Δt) innerhalb der vorgebbaren Grenzen liegen sollen, als erfüllt erkennt und die Mess- und/oder Steuerelektronik (12) so ausgeführt ist, dass die Messung beendet wird, sobald das Kriterium erfüllt ist.

7. Vorrichtung nach Anspruch 6,
**dadurch gekennzeichnet,**
**dass** das Erfüllen des Kriteriums über die das Display (14) ansteuernde Mess- und/oder Steuerelektronik (12) signalisierbar ist.

8. Vorrichtung nach Anspruch 6 oder 7,
**dadurch gekennzeichnet,**
**dass** mittels der Mess- und/oder Steuerelektronik (12) bei Erfüllung des Kriteriums ein Mittelwert für den innerhalb des Fensters (16) liegenden Abschnitts der Messkurve (18) gebildet wird.

9. Vorrichtung nach Anspruch 8,
**dadurch gekennzeichnet,**
**dass** das Display (14) über die Mess- und/ oder Steuerelektronik (12) so ansteuerbar ist, dass auch der betreffende Mittelwert auf dem Display (14) angezeigt wird.

10. Vorrichtung nach einem der vorhergehenden Ansprüche,
**dadurch gekennzeichnet,**
**dass** die Messgröße (T) auf dem Display (14) online darstellbar ist.

11. Verwendung des Verfahrens und/oder der Vorrichtung nach einem der vorhergehenden Ansprüche zur Bestimmung des Gefrierpunktes von Flüssigkeiten.

## Claims

1. A method for the graphic representation of dynamic processes, wherein at least one measured variable (T) is monitored during the measurement by means of an electronic measurement and/or control device (12) and by means of a display (14) correspondingly controlled by it as to whether its changes (ΔT) during a presettable time period (Δt) extending up to the respective current measurement time (tₐ) lie within presettable limits, with a window (16) being shown on the display (14) whose dimensions correspond to the presettable time period (Δt) and to the presettable limits (ΔT) and with this window (16) shown on the display (14) following the respective current measured point (Tₐ) during the measurement, wherein the criterion according to which the changes of the measured variable (T) should lie within the presettable limits (ΔT) during the presettable time period (Δt) is considered as satisfied and the measurement is ended by means of the electronic measurement and/or control device (12) whenever the last measured portion of the measurement curve (18) extending over the presettable time period (Δt) lies completely within the window (16).

2. A method in accordance with claim 1, **characterised in that** the satisfaction of the criterion is signalled.

3. A method in accordance with claim 1 or claim 2, **characterised in that,** when the criterion is satisfied, a mean value is formed for the portion of the measurement curve (18) lying within the window (16).

4. A method in accordance with claim 3, **characterised in that** the respective mean value is also shown on the display (14).

5. A method in accordance with any one of the preceding claims, **characterised in that** the measured variable (T) on the display (14) is shown online.

6. An apparatus (10) for the graphic representation of dynamic processes having a display (14) controllable via a measurement and/or control device (12), in particular for the carrying out of the method in accordance with any one of the preceding claims,
**characterised in that**
the electronic measurement and/or control device (12) is made and the display (14) is controllable via this measurement and/or control device (12) such that the observation of presettable limits (ΔT) for the measured value changes is monitored during a presettable time period (Δt) extending up to the respective current measurement time (tₐ), and a window (16) is able to be shown on the display (14) whose dimensions correspond to the presettable time period (Δt) and to the presettable limits (Δt) and which follows the respective current measured point (Tₐ) during the measurement, wherein the measurement and/or control electronics (12) recognise the criterion according to which the changes (ΔT) of the measured variable (T) should lie within the presettable limits during the presettable time period (Δt) as satisfied whenever the last measured portion of the measurement curve (18) extending over the presettable time period (Δt) lies completely within the window (16) and the electronic measurement and/or control electronics (12) are configured such that the measurement is ended as soon as the criterion is satisfied.

7. An apparatus in accordance with claim 6, **characterised in that** the satisfaction of the criterion can be signalled via the measurement and/or control electronics controlling the display (14).

8. An apparatus in accordance with claim 6 or claim 7, **characterised in that** a mean value for the portion of the measurement curve (18) lying within the window (16) is formed by means of the measurement and/or control electronics (12) on satisfaction of the criterion.

9. An apparatus in accordance with claim 8, **characterised in that** the display (14) can be controlled via the measurement and/or control electronics (12) such that the respective mean value is also shown on the display (14).

10. An apparatus in accordance with any one of the preceding claims, **characterised in that** the measured variable (T) on the display (14) can be shown online.

11. Use of the method and/or of the apparatus in accordance with any one of the preceding claims for the determination of the freezing point of liquids.

## Revendications

1. Procédé pour la représentation graphique de processus dynamiques, dans lequel on surveille au moins une grandeur de mesure (T) pendant la mesure au moyen d'un appareil de mesure et/ou de commande électronique (12) et d'un affichage (14) piloté par celui-ci de manière correspondante, pour savoir si leurs variations (ΔT) pendant une période temporelle (Δt) prédéterminée allant jusqu'à l'instant de mesure actuel respectif (ta) sont situées à l'intérieur de limites prédéterminées, dans lequel une fenêtre (16) est illustrée sur l'affichage (14), dont les dimensions correspondent à la période temporelle prédéterminée (Δt) et aux limites prédéterminées (ΔT), et cette fenêtre (16) illustrée sur l'affichage (14) est entraînée pendant la mesure avec le point de mesure actuel respectif (Pa), et dans lequel, lorsque le tronçon de la courbe de mesure (18), mesuré en dernier lieu et s'étendant sur la période temporelle prédéterminée (Δt), est situé totalement à l'intérieur de la fenêtre (16), le critère selon lequel les variations de la grandeur de mesure (T) pendant la période temporelle prédéterminée (Δt) sont censées être situées à l'intérieur des limites prédéterminées (ΔT) est considéré comme satisfait au moyen de l'appareil de mesure et/ou de commande (12), et la mesure est terminée.

2. Procédé selon la revendication 1,
**caractérisé en ce que** la satisfaction du critère est signalisée.

3. Procédé selon la revendication 1 ou 2,
**caractérisé en ce que** lorsque le critère est satisfait, on forme une valeur moyenne pour le tronçon de la courbe de mesure (18) qui se trouve à l'intérieur de la fenêtre (16).

4. Procédé selon la revendication 3,
**caractérisé en ce que** la valeur moyenne concernée est également indiquée sur l'affichage (14).

5. Procédé selon l'une des revendications précédentes,
**caractérisé en ce que** la grandeur de mesure (P) est représentée "en-ligne" sur l'affichage (14).

6. Dispositif (10) pour la représentation graphique de processus dynamiques, comprenant un affichage (14) susceptible d'être piloté par un appareil de mesure et/ou de commande (12), en particulier pour mettre en oeuvre le procédé selon l'une des revendications précédentes,
**caractérisé en ce que** l'appareil de mesure et/ou de commande (12) est réalisé de telle manière, et l'affichage (14) est susceptible d'être piloté par cet appareil de mesure et/ou de commande (12) de telle façon que le respect de limites prédéterminées (ΔT) pour les variations d'une valeur de mesure pendant une période temporelle prédéterminée (Δt) allant jusqu'à l'instant de mesure actuel respectif (ta) sont surveillées et une fenêtre (16) est alors illustrée sur l'affichage (14), dont les dimensions correspondent à la période temporelle prédéterminée (Δt) et aux limites prédéterminées (ΔT), et cette fenêtre est entraînée avec le point de mesure actuel respectif (Pa) pendant la mesure, et l'appareil de mesure et/ou de commande (12) reconnaît, quand le tronçon de la courbe de mesure (18) mesuré en dernier lieu et s'étendant sur la période temporelle prédéterminée (Δt) est situé totalement à l'intérieur de la fenêtre (16), que le critère selon lequel les variations (ΔT) de la grandeur de mesure (T) pendant la période temporelle prédéterminée (Δt) sont censées être situées à l'intérieur des limites prédéterminées, comme satisfait, et l'appareil électronique de mesure et/ou de commande (12) est ainsi réalisé que la mesure est terminée dès que le critère est satisfait.

7. Dispositif selon la revendication 6,
**caractérisé en ce que** la satisfaction du critère est susceptible d'être signalisé via l'appareil électronique de mesure et/ou de commande (12) qui pilote l'affichage (14).

8. Dispositif selon la revendication 6 ou 7,
**caractérisé en ce que,** lorsque le critère est satisfait, une valeur moyenne pour le tronçon de la courbe de mesure (18) qui se trouve à l'intérieur de la fenêtre (16) est formée au moyen de l'appareil électronique de mesure et/ou de commande (12).

9. Dispositif selon la revendication 8,
**caractérisé en ce que** l'affichage (14) est susceptible d'être piloté par l'appareil électronique de mesure et/ou de commande (12) de telle manière que la valeur moyenne concernée est également indiquée sur l'affichage (14).

10. Dispositif selon l'une des revendications précédentes,
**caractérisé en ce que** la grandeur de mesure (P) est susceptible d'être indiquée "en-ligne" sur l'affichage (14).

11. Utilisation du procédé et/ou du dispositif selon l'une des revendications précédentes pour la détermination du point de congélation de liquides.
